# DEMANDE DE BREVET EUROPEEN

(11) **EP 2 799 605 A1**
(43) Date de publication de la demande: **05.11.2014**
(21) Numéro de dépôt: 14166510.9
(22) Date de dépôt: 30.04.2014
(51) Int. Cl.: D04H 1/4274, D01G 11/00, D01G 11/04

(54) **Procédé de préparation par granulation de déchets textiles en vue de l'obtention de matières textiles recyclées et installation**

(30) Priorité: 30.04.2013 FR 1353936
(71) Demandeur: Blanchisserie Industrielle du Centre, 42400 Saint-Chamond (FR)
(72) Inventeur: Kekayas, Michel, 42400 SAINT-CHAMOND (FR)
(74) Mandataire: Cabinet Laurent & Charras

(57) **Abrégé**

Le procédé de traitement des déchets textiles en vue de l'obtention de matières textiles recyclées est ***caractérisé*** en ce qu'il met en oeuvre:
- une opération de granulation dans une machine de granulation incluant un rotor et une pluralité de lames décalées radiales disposées en hélice pour déchiqueter la matière textile traitée en très petits morceaux pour être évacuée à travers une grille d'évacuation intégrée dans la machine, ladite grille assurant une seconde fonction de défibrage de la matière textile,
- et en ce que la matière ainsi préparée suit, en fonction de sa nature et du produit final désiré, une seconde phase opératoire de traitement et de séparation des matières traitées.

## Description

L'invention se rattache au secteur technique du traitement des déchets textiles en vue de leur utilisation sous forme recyclée.

L'invention se rattache selon une application spécifique au secteur technique des produits d'isolation mettant en oeuvre le recyclage de produits textiles usagés et détériorés.

L'utilisation de déchets textiles pour la constitution de produits isolants relève d'une technologie récente mise en oeuvre et développée par le Demandeur selon la solution décrite dans la demande de brevet français FR 2970274. Selon ce document, il est précisé et revendiqué que l'isolant thermique et phonique est conçu à partir de déchets textiles recyclés préalablement effilochés ou broyés, et est constitué par une structure multicouches comprenant une âme centrale expansée constituée de matières textiles naturelles du type coton, lin, laine, par l'isolation thermique épaisse et peu dense, et d'au moins sur l'une des faces de ladite couche centrale d'une couche externe compressée textile et synthétique du type polyester, polyamide, peu épaisse, et de grande densité, supérieure à la densité de la couche centrale pour assurer des fonctions d'isolation phonique, de résistance à l'humidité, de tenue mécanique de protection.

Dans une application particulière, l'isolant inclut un voile de fibres aramides issues de vêtements de pompiers qui ont été préalablement broyés et recyclés sous forme de voile du type précité.

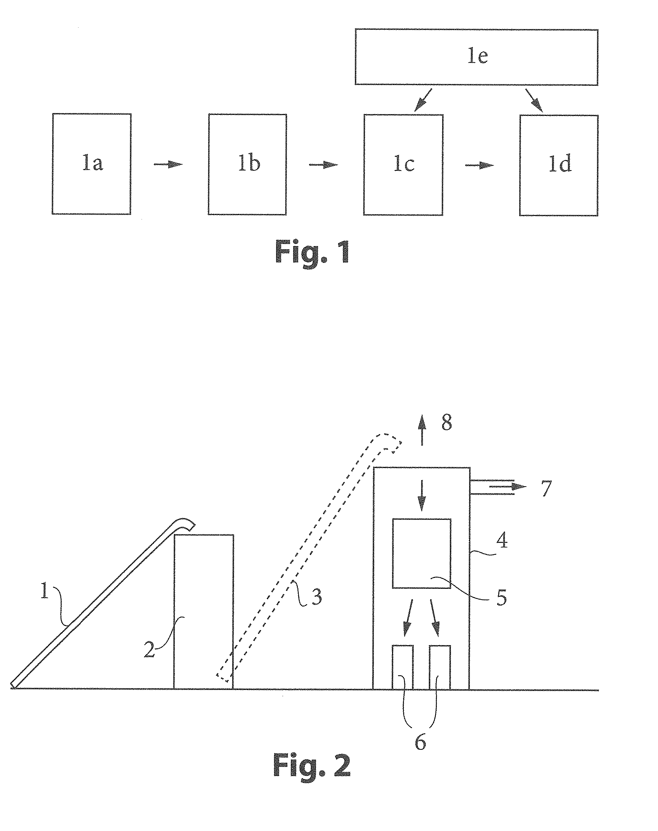

En pratique, le procédé utilisé en vue de l'obtention de l'isolant textile consiste dans la mise en oeuvre d'une succession d'opérations identifiées schématiquement à la figure 1 des dessins.

Cette figure 1 montre de manière schématique une installation telle qu'utilisée actuellement mettant en oeuvre la technique de l'effilochage des déchets textiles. Pour des raisons de clarté et de compréhension, les machines et équipement composants ne sont pas identifiés dans le détail, la succession des postes opératoires étant suffisante pour appréhender l'installation d'effilochage des déchets textiles, et ce, comparativement ensuite avec la solution de l'invention.

La première opération réalisée dans la zone (1a) consiste à la préparation de la matière textile issue de vêtements, par exemple, qui est découpée en tronçons. Ceux-ci sont évacués selon une opération réalisée dans la zone (1b) consistant dans le stockage des matières textiles découpées, mélangées ou non, dans une ou plusieurs chambre(s) de stockage afin de créer un stock tampon.

L'opération suivante (1c) est celle du pré-effilochage consistant à la pré-ouverture des fibres textiles. L'opération suivante (1d) est celle de l'effilochage définitif avec la séparation des fibres ce qui génère beaucoup de poussières.

Ces opérations (1c) (1d) sont mises en oeuvre avec un système aéraulique centralisé (le) qui couvre et assure les opérations de transport des matières et de filtration des poussières.

On constate donc que cette partie de l'installation de traitement par pré-effilochage pour effilochage définitif en vue de la récupération des déchets textiles est très onéreuse, avec un nombre conséquent de machines et matériels permettant de traiter en sortie d'installation environ deux tonnes de déchets textiles à l'heure.

D'autres phases opératoires en aval de l'effilochage restent néanmoins nécessaires pour permettre l'obtention de produits à base de déchets textiles recyclés. Bien que ne faisant pas partie de l'objet de l'invention, elles sont citées et non illustrées, pour information complémentaire pour permettre d'appréhender l'importance de l'installation dans son ensemble.

Après l'opération finale d'effilochage, il y a une opération de traitement antifongique et ignifuge par pulvérisation de produits dissous (entre 15 et 25 %), ce qui implique en aval une opération de séchage conséquent pour évaporer l'eau des fibres naturelles.

Une autre opération est l'intégration d'un mélange de fibres textiles effilochées avec un thermo-liant bi-composants qui nécessite de peser chaque type de fibres pour respecter un dosage précis. Cette opération est faite par des machines dénommées « chargeuses-peseuses », et il en faut autant qu'il y a de types de fibres. Ensuite il faut mélanger l'ensemble à l'aide de machines dénommées « ouvreuses » permettant ainsi d'aérer les fibres.

L'opération suivante consiste dans le nappage des produits résultant de l'opération précédente. Lors de cette opération de nappage, la matière constitutive du produit issu de la phase précédente est mise en nappe homogène en épaisseur et en densité. Un capteur à rayons X vérifie à chaque instant et très précisément les paramètres et effectuent des corrections en cas de besoin. A ce moment la nappe est construite mais pas encore consolidée. La matière mélangée arrive alors d'une cheminée (partie de l'installation) par le biais d'un important réseau ou système de tuyauterie. Le nappage créé est mou et si l'on presse la nappe, elle ne reprend pas sa forme originelle. Il y a donc nécessité d'une opération supplémentaire, celle du thermo-liage. Dans le cadre de cette cinquième opération, la matière obtenue est transférée dans un four comprenant plusieurs compartiments. Les premiers sont utilisés pour chauffer la matière à une température entre 150 et 200 °C, tandis que les compartiments suivants sont utilisés pour refroidir progressivement le feutre ou produit final car c'est durant cette opération que s'effectue la fixation des fibres entre elles, c'est-à-dire la consolidation. Si à la sortie du four le feutre ou produit final peut être utilisé directement, il est préférable qu'il soit à température ambiante, étant alors directement prêt à être utilisé.

Le procédé décrit est ainsi exploité par le Demandeur et ce à grande échelle et de manière satisfaisante en termes de qualité de produits obtenus en fin d'opération. Ceci étant, la mise en oeuvre d'un tel procédé est très onéreuse. Une installation complète de ce genre coûte environ un million d'euros. De ce fait, cela limite les éventuels utilisateurs car les volumes à traiter doivent être importants en tonnage pour permettre un amortissement de ce type d'installation. En outre, il est constaté que ce type d'installation, comprenant un grand nombre de machines, reste très consommateur d'énergie et aussi générateur de pertes de matières recyclées. En outre, la nature de l'installation fait qu'il y a nécessité d'une sélection en amont des matières à traiter car il y a des inadaptations manifestes. Sur la figure 1 qui représente une ligne d'effilochage selon le procédé décrit, il a été mesuré la surface nécessaire au sol pour son installation. Cela requiert une surface en longueur de 62 mètres de long avec une largeur de 15 mètres, soit une surface globale de l'ordre de 930 mètres carrés, ce qui est très conséquent.

Selon l'art antérieur de la figure 1, en particulier dans les zones (1c) et (1d) relatives au pré-effilochage et à l'effilochage lui-même, les matières textiles traitées génèrent une forte électricité statique avec des risques d'inflammation. Il est donc nécessaire de vaporiser des produits antistatiques. En outre, dans ces deux phases, opérations (1c) + (1d), les griffes associées aux mécanismes d'effilochage génèrent un volume de poussière entraînant une perte de matières de fibres détériorées de l'ordre de 10 % du volume traité, ce qui est loin d'être négligeable, sans compter l'environnement à traiter.

Comme il apparaît également dans le descriptif de la technologie de l'effilochage, celle-ci nécessite une préparation préalable des matières textiles.

En outre, une des contraintes actuelles du procédé connu est celle de l'espace dimensionnel nécessaire à la mise en oeuvre d'une telle installation. Aussi, un autre objectif recherché par le Demandeur est celui de la réduction de l'espace dimensionnel nécessaire pour recevoir une telle installation.

En outre, un autre problème selon l'art antérieur réside dans la difficulté, voire l'impossibilité de traiter des textiles complexes incorporant des matériaux ou objets durs qui se trouvent sur lesdits vêtements, tels que bandes réfléchissantes, boutons, etc...

On connaît par ailleurs par le document DE 584 933 la mise en oeuvre d'un tambour pour effilocheuse et/ou machines à carder incluant des lames dentées. Selon ce document, ces dites lames sont réglables en position, en inclinaison angulaire. La conception de ce type de machine et de tambour associé remonte à 1933 et n'était pas du tout applicable à l'obtention de matières textiles recyclées, et en particulier, pour traiter tous types de textiles, y compris des textiles complexes incluant des matériaux durs.

On connaît également par le document US 3 815 178 une méthode d'extraction de fibres de coton, c'est-à-dire, à partir de fleurs de coton incluant des impuretés. Les bouloches des linters de coton produites par le traitement des fibres de coton dans un moulin à huile sont distribuées en nappe entre des rouleaux d'affinage et diffuseur afin de démêler les fibres des impuretés. Ces impuretés associées à ces fibres de coton ne sont sûrement pas des corps solides, durs, du type bandes réfléchissantes dans des textiles complexes recyclés. Ce document US 3 815 178 est donc simplement à considérer au titre de l'état de la technique et il ne répond pas aux exigences et aux besoins requis par la présente invention.

La démarche du Demandeur a donc été de réfléchir à l'ensemble des contraintes et des limites dans la mise en oeuvre du procédé d'effilochage actuel, afin d'en réduire le coût et aussi d'élargir la gamme des matières pouvant être traitée avec un résultat final amélioré et une simplification des phases opérationnelles plus réduit.

Un autre objectif du Demandeur était de limiter, voire de supprimer l'apparition de poussières avec ce phénomène d'électricité statique, et ce, à des fins d'une plus grande sécurité de l'installation.

Un autre objectif du Demandeur était de s'affranchir de la nécessité antérieure de sélectionner les matières textiles pouvant incorporés des matériaux ou objets durs ne pouvant être introduits dans les machines et équipements mettant en oeuvre le procédé d'effilochage.

Un autre objectif était ainsi de pouvoir traiter les textiles complexes, incluant des matériaux durs tels que bandes réfléchissantes, boutons et autres produits rigides ou durs.

En égard de ces objectifs recherchés par le Demandeur, ce dernier a tout d'abord réfléchi pour apporter des améliorations à chaque phase opératoire (1a à 1e) du procédé actuel d'effilochage rappelé précédemment, et représenté figure 1. Les éventuelles améliorations ne sont pas significatives en termes de résultats. Dans ces conditions, soit le procédé actuel était conservé avec quelques améliorations insignifiantes, soit il fallait repenser l'économie même du procédé connu ainsi rappelé.

C'est donc vers cette démarche que le Demandeur s'est orienté.

La solution trouvée apporte de manière inattendue des avantages nombreux répondant aux objectifs initiaux recherchés. Cette solution vise à mettre en oeuvre un traitement de la matière textile tout à fait différent de l'opération initiale d'effilochage selon le procédé connu. Cette opération d'effilochage qui se comprenait comme une opération basique essentielle du procédé connu est purement et simplement supprimée selon l'invention. A cette opération d'effilochage qui avait pour conséquence de générer les opérations suivantes (1a à 1e) est substituée selon l'invention une opération de granulation de la matière textile.

Les machines de granulations sont connues en soi pour réduire en morceaux de tailles plus ou moins fines des matériaux pouvant être en plastiques, des pneumatiques, des isolants. Ces machines peuvent traiter des matériaux de fer mou ou de petites tailles. Ces machines de granulation sont agencées avec un rotor recevant radialement une pluralité de lames décalées angulairement les unes des autres dans une configuration en hélice, ce qui permet un découpage progressif des produits traités. Une machine de ce type est par exemple décrite dans le brevet WO 01/83111.

Ainsi, de manière tout à fait inattendue, et à l'encontre de la technologie actuelle, le Demandeur a voulu intégrer dans le traitement des matériaux textiles en vue de leur recyclage pour constituer notamment des isolants, dans le domaine de la construction et du bâtiment, en amont du procédé une opération de granulation des matériaux textiles entraînant ensuite une modification du procédé actuel dans toutes les phases opérationnelles connues. Le Demandeur a ainsi procédé à un certain nombre de tests qui l'ont conforté dans l'intérêt et le choix de cette technologie de granulation à intégrer dans le recyclage des matériaux textiles, et notamment de textiles complexes incluant des matériaux durs ou rigides, avec une application particulière et avantageuse pour la fabrication d'isolants non limitativement, et en s'affranchissant de tout tri sélectif préalable entre les différentes catégories de textiles, complexes ou non.

Ainsi et selon l'invention, le procédé de traitement des déchets textiles en vue de l'obtention de matières textiles recyclées est remarquable en ce qu'il met en oeuvre :
- une opération de granulation dans une machine de granulation incluant un rotor et une pluralité de lames décalées radiales disposées en hélice pour déchiqueter la matière textile traitée en très petits morceaux pour être évacuée à travers une grille d'évacuation intégrée dans la machine, ladite grille assurant une seconde fonction de défibrage de la matière textile,
- et en ce que la matière ainsi préparée suit, en fonction de sa nature et du produit final désiré, une seconde phase opératoire de traitement et de séparation des matières traitées.

Selon une première variante de réalisation, ladite seconde phase suivante comprend :
2a - une seconde opération de nappage des matières préparées par granulation pour définir des nappes en épaisseur et en densité,
2b - une troisième opération par un traitement à sec ou humide des matériaux textiles,
2c - une quatrième opération de thermo-liage.

Ainsi le schéma du procédé selon l'invention devient P.IN1 granulation, P.IN2a nappage, P.IN2b traitement à sec, P.IN2c thermo-liage.

En seconde variante, la phase opératoire de granulation est suivie par les phases opératoires de traitement liquide, de mélange de nappage et de thermo-liage.

En troisième variante, la phase opératoire de granulation est suivie par des phases opératoires de nappage des produits et de thermo-liage.

En quatrième variante, et de manière optimisée pour le traitement des textiles complexes incluant des matériaux durs et rigides, ladite seconde phase de traitement et de séparation des matières traitées est effectuée avec une table densimétrique assurant la séparation des matières lourdes, des matières fines lourdes, des matières légères, des matières ultra légères.

Selon une autre caractéristique, l'installation pour la mise en oeuvre du procédé de traitement des déchets textiles en vue de l'obtention de matières textiles recyclées comprend :
- une machine de granulation incluant un rotor et une pluralité de lames décalées radiales disposées en hélice pour déchiqueter la matière textile traitée en très petits morceaux pour être évacuée à travers une grille d'évacuation intégrée dans la machine, ladite grille assurant une seconde fonction de défibrage de la matière textile,
- et en ce qu'en aval de la machine de granulation sont disposés des moyens permettant la réception de la matière ainsi déchiquetée, en vue, dans une seconde phase opératoire, d'assurer son traitement et la séparation des matières traitées, avec des matières lourdes, des matières fines lourdes, des matières légères, des matières ultralégères.

Selon une autre caractéristique, les produits textiles recyclés selon le procédé de granulation trouvent une application pour la conception de produits isolants textiles.

Ces caractéristiques et d'autres encore ressortiront bien de la suite de la description.

Pour fixer l'objet de l'invention illustré de manière non limitative aux figures des dessins,
- La figure 1 est une vue à caractère schématique d'une installation selon l'art antérieur,
- La figure 2 est une vue à caractère schématique d'une ligne du procédé mettant en oeuvre la phase de granulation selon l'invention et une première variante de la seconde phase de traitement et de séparation des matières traitées,
- La figure 3 est une vue à caractère schématique d'une ligne du procédé mettant en oeuvre la phase de granulation avec une seconde opération de traitement et de séparation par une table densimétrique,
- La figure 4 est une vue d'une grille incorporée dans le granulateur,
- La figure 5 est une vue d'un exemple de grille comportant des aspérités.

Afin de rendre plus concret l'objet de l'invention, on le décrit maintenant d'une manière non limitative.

On a représenté figure 2 une ligne du procédé mettant en oeuvre la phase de granulation selon l'invention. La surface au sol nécessaire est de 17 mètres par 9 mètres, soit un espace dimensionnel de 153 m2.

On a ainsi représenté figure 2 la machine de granulation (2) et en val de celle-ci les moyens permettant la réception de la matière déchiquetée en vue d'assurer dans une seconde phase opératoire son traitement et la séparation des matières traitées. Dans la mise en oeuvre, figure 2, lesdits moyens sont les suivants avec un tapis convoyeur (1) d'acheminement des déchets textiles à recycler. La machine de granulation broie lesdits déchets de sorte à ce qu'ils se présentent sous une forme déchiquetée dimensionnelle très petite. Ces produits sont ensuite transférés par un système d'aspiration (3) vers un appareil (4) destiné à prélever les matériaux durs tels que boutons et similaires, lesquels sont évacués. L'appareil (4) assurant des fonctions de cyclone-séparateur des matériaux durs et des poussières présente à sa base une colonne de distribution (5) susceptible de permettre l'évacuation par gravité des matériaux durs dans des containers (6), l'évacuation des déchets textiles traités se faisant par la sortie (7) en partie haute de l'appareil pour permettre les opérations suivantes de nappage des matières préparées par granulation pour définir des nappes en épaisseur et en densité, puis par une opération de traitement à sec ou humide des matériaux textiles traités, puis une opération de thermo-liage, et aussi une sortie (8) par le haut pour l'évacuation des poussières.

Outre les avantages liés à la simplification du procédé et donc de l'installation, la réduction des coûts, l'économie d'énergie par la limitation du nombre de machines intervenant, le Demandeur a pu constater aussi de manière inattendue les avantages spécifiques dans les caractéristiques techniques des produits recyclés obtenus selon l'invention, et en particulier dans les performances sur le plan technique.

Ainsi, des essais comparatifs ont été effectués à partir d'un même matériau textile destiné à être recyclé et de même origine rassemblant des vêtements de travail en coton et polycoton (majoritairement coton). Les échantillons destinés à être traités par le procédé connu mettant en oeuvre l'effilochage et par le procédé selon l'invention mettant en oeuvre la granulation ont également été liés avec 15 % de bi-composants 4.4 de 32 mm et avec une densité de 30 kg/m3. La mesure de la conductivité thermique λ en w/m.°k (65%HR selon la norme NF EN12667) a donné les résultats suivants :
PO1 produit effiloché λ = 0,039 W/m.°K
PO2 produit granulé λ = 0,039 W/m.°K

Des essais similaires réalisés sur une autre matière textile en faisant varier uniquement le diamètre de la grille du granulateur ont donnés les résultats suivants :
PO3 produit granulé diamètre 20 mm λ = 0,038 W/m.°K
PO4 produit granulé diamètre 35 mm λ = 0,039 W/m.°K

On observe que le diamètre de granulation donné par la grille intégrée dans le granulateur a une incidence certaine sur la performance thermique du produit final et en particulier le paramètre λ (conductivité thermique) qui augmente avec le diamètre de granulation. Le diamètre optimal se situant entre 4 mm et 35 mm en fonction de la composition des textiles recyclés.

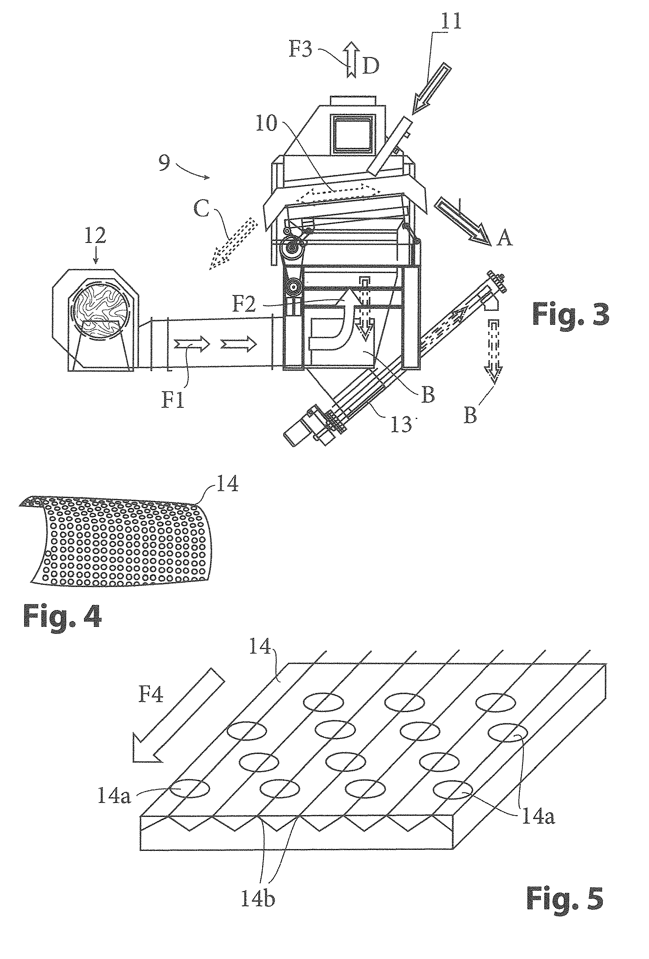

On se réfère maintenant à la mise en oeuvre optimisée du procédé selon l'invention, associant le traitement des matières textiles incluant ou non, et en degrés variables, des matières textiles complexes avec des matériaux durs par la machine de granulation avec la grille incorporée, et avec une table densimétrique permettant de différencier et de séparer les matières lourdes, les matières fines lourdes, les matières légères et les matières ultra légères. En aval de la machine de granulation sont disposés des moyens permettant la réception de la matière ainsi déchiquetée en vue, dans une seconde phase opératoire, d'assurer son traitement et la séparation des matières traitées. On a ainsi représenté figure 3 ainsi la mise en oeuvre de la table densimétrique. Celle-ci est référencée dans son ensemble par (9) et inclut de manière connue une table de vibrations inclinée (10) avec un mécanisme vibratoire associé, une entrée (11) des matières textiles traitées en amont par la machine de granulation (2). Cette entrée (11) se situe en partie haute de la table densimétrique (9) pour distribuer les matières déchiquetées sur la table vibrante. Il est prévu un dispositif (12) de distribution d'air disposé à côté de la table densimétrique et envoyant l'air à l'intérieur de la table densimétrique de bas en haut, selon les flèches F1-F2-F3, selon les stades d'évacuation. On a représenté aussi un moyen collecteur et élévateur (13) réceptionnant les matières fines lourdes (B) pour les évacuer. L'entrée (11) permet l'alimentation de la table densimétrique (9) avec des matières légères, des matières lourdes, des matières appelées fines lourdes et des matières ultra légères et des poussières.

Par l'action et le fonctionnement de la table densimétrique, les matières lourdes (A) sont évacuées latéralement au niveau de la partie haute de la table vibratoire inclinée. Les matières fines lourdes (B) sont évacuées vers la partie basse de la table densimétrique en passant à travers une grille. Les matières légères (C) sont évacuées latéralement en sortie basse de la table vibratoire inclinée et qui correspondent aux produits nettoyés. Les matières ultra légères et poussières (D) sont évacuées par le haut de la table densimétrique par le flux d'air F3 sortant et qui sont aspirées au-dessus de la table densimétrique en tombant dans un cyclone avec une vanne écluse.

Dans une variante de mise en oeuvre de la table densimétrique, et selon la nature des produits, il peut y avoir trois sorties de matières, à savoir les matières lourdes (A), les matières fines lourdes (B) qui sont évacuées comme précédemment, tandis que les matières légères (C) et les matières ultralégères (D) peuvent être évacuées par la même sortie, ensemble, par le haut de la table par le flux d'air (F3) en étant aspirées par le haut.

La mise en oeuvre de la table densimétrique permet, selon les tests effectués, d'avoir une perte matière totale de 4 % de la masse initiale et d'atteindre l'objectif de 0 % de produits durs dans le produit final.

En d'autres termes, la combinaison dans la mise en oeuvre du procédé avec la machine de granulation avec grille et la table densimétrique permet de traiter des textiles complexes incluant des parties dures et rigides en vue d'une suppression après traitement de ces produits durs dans les matériaux finaux obtenus.

En se référant aux figures 4 et 5, la grille (14) intégrée dans la machine de granulation permet le passage de la matière d'évacuation après l'opération de granulation. Le diamètre des trous (14a), et la forme desdits trous peuvent varier en fonction des besoins et la grille peut être interchangeable. D'une manière particulièrement avantageuse, et dans le cadre de l'optimisation de l'invention, la grille assure une fonction supplémentaire de défibrage de la matière textile de par la poussée et le frottement à travers la grille. Ce défibrage permet d'augmenter les performances des produits isolants dans l'application des produits recyclés issus du procédé de l'invention dans le domaine technique de l'isolation. Des diamètres de trous des grilles de l'ordre de 20 mm, ou 12 mm, ou 8 mm sont avantageusement utilisés. Plus le diamètre des trous de la grille est faible, plus la matière reste en contact avec la grille avant sa sortie.

Plus précisément, la grille est agencée pour comporter des aspérités permettant un défibrage plus important et donc, une matière plus performante pour la réalisation d'isolants. Différentes manières de réalisation d'aspérités (14b) peuvent être prévues avec des stries disposées comme représenté figure 5 dans le sens de rotation F4 du granulateur sur 20 à 100 % de la surface de la grille. On peut avoir aussi des rainurages croisés permettant de réaliser des formes en pics. Ces aspérités sont réalisées sur la surface intérieure de la grille. De cette manière, les morceaux de textiles accrocheront les aspérités se situant en bordure des trous (14a) de la grille, et seront ainsi défibrés avant de passer dans le trou suivant.

La surface striée ou avec aspérités peut représenter entre 20 et 100 % de la surface totale de la grille. La surface striée ou présentant des aspérités peut être continue ou établie par bandes successives avec une alternance de zones de striures ou d'aspérités, et de zones sans striures ou aspérités.

La combinaison de toutes ces caractéristiques permet une optimisation totale du procédé selon l'invention avec la suppression des points durs.

Par ailleurs, différents tests comparatifs ont été effectués sur des produits isolants obtenus à partir de matières textiles recyclées, soit mettant en oeuvre le procédé connu qui intègre l'effilochage, soit le procédé selon l'invention qui intègre la granulation en vue de la réalisation de produits multicouches, avec une couche externe et une couche centrale en bi-couches, et avec une couche centrale et des couches externes de part et d'autre en tri-couches. La mise en oeuvre du procédé, selon l'invention, apporte des avantages avec en particulier une conductivité thermique (λ) égale voir inférieure à celle mesurée pour les autres produits isolants obtenus selon le procédé connu intégrant l'effilochage.

Selon l'invention, on obtient ainsi de manière inattendue des avantages propres à la structure des produits obtenus en intégrant la phase de granulation des matériaux textiles recyclés et notamment des textiles complexes.

En outre, et selon l'invention, la simplification de l'installation génère de nombreux avantages. On supprime le phénomène de l'électricité statique car la matière textile est découpée différemment. On supprime le phénomène des poussières et on réduit ainsi la perte de matières. Il n'y a plus de préparation préalable des déchets textiles. Par exemple, les articles vestimentaires avec bandes réfléchissantes portés par les pompiers sont traités tels quels, sans enlèvement des dites bandes. Les textiles complexes peuvent être traités avec, après la mise en oeuvre du procédé, la suppression des produits durs.

En outre, la puissance électrique nécessaire au fonctionnement de l'installation est bien moindre. Les applications des produits recyclés selon le procédé de l'invention sont nombreuses et non limitées.

L'application des produits textiles recyclés selon le procédé de granulation, selon l'invention, est particulièrement avantageuse pour la conception de produits d'isolation dans le domaine de la construction et du bâtiment.

## Revendications

1. Procédé de traitement des déchets textiles en vue de l'obtention de matières textiles recyclées, ***caractérisé* en ce qu'**il met en oeuvre :
- une opération de granulation dans une machine de granulation incluant un rotor et une pluralité de lames décalées radiales disposées en hélice pour déchiqueter la matière textile traitée en très petits morceaux pour être évacuée à travers une grille d'évacuation intégrée dans la machine, ladite grille assurant une seconde fonction de défibrage de la matière textile,
- et **en ce que** la matière ainsi préparée suit, en fonction de sa nature et du produit final désiré, une seconde phase opératoire de traitement et de séparation des matières traitées.

2. Procédé selon la revendication 1, ***caractérisé* en ce que** la seconde phase comprend :
- une seconde opération de nappage des matières préparées par granulation pour définir des nappes en épaisseur et en densité,
- une troisième opération par un traitement à sec ou humide des matériaux textiles,
- une quatrième opération de thermo-liage.

3. Procédé selon la revendication 1, ***caractérisé* en ce que** la phase opératoire de granulation est suivie par les phases opératoires de traitement liquide, de mélange de nappage et de thermo-liage.

4. Procédé selon la revendication 1, ***caractérisé* en ce que** la phase opératoire de granulation est suivie par des phases opératoires de nappage des produits et de thermo-liage.

5. Procédé selon la revendication 1, ***caractérisé* en ce que** pour le traitement des textiles complexes incluant des matériaux durs et rigides, ladite seconde phase de traitement et de séparation des matières traitées est effectuée avec une table densimétrique assurant la séparation des matières lourdes, des matières fines lourdes, des matières légères, des matières ultra légères.

6. Procédé selon l'une quelconque des revendications 1 à 5, ***caractérisé* en ce que** la grille présente des aspérités sur son côté intérieur.

7. Produits textiles recyclés selon le procédé selon l'une quelconque des revendications 1 à 6, ***caractérisés*** dans leur application pour constituer des produits d'isolation.

8. Installation pour la mise en oeuvre du procédé de traitement des déchets textiles en vue de l'obtention de matières textiles recyclées, selon l'une quelconque des revendications 1 à 6, ***caractérisée* en ce qu'**elle comprend :
- une machine de granulation incluant un rotor et une pluralité de lames décalées radiales disposées en hélice pour déchiqueter la matière textile traitée en très petits morceaux pour être évacuée à travers une grille d'évacuation intégrée dans la machine, ladite grille assurant une seconde fonction de défibrage de la matière textile,
- et **en ce qu'**en aval de la machine de granulation sont disposés des moyens permettant la réception de la matière ainsi déchiquetée, en vue dans une seconde phase opératoire, d'assurer son traitement et la séparation des matières traitées, avec des matières lourdes, des matières fines lourdes, des matières légères, des matières ultralégères.

9. Installation permettant le traitement des déchets textiles en vue de l'obtention des matières textiles recyclées selon la revendication 8 et mettant en oeuvre le procédé selon l'une quelconque des revendications 1 à *4,* ***caractérisée* en ce qu'**elle comprend une machine de granulation (2) et des moyens de traitement des matières déchiquetées comprenant un tapis convoyeur (1) d'acheminement des déchets textiles à recycler, ladite machine de granulation broyant lesdits déchets de sorte à ce qu'ils se présentent sous une forme déchiquetée dimensionnelle très petite, ***et en ce* qu'**elle comprend un système d'aspiration (3) desdits déchets vers un appareil (4) destiné à prélever les matériaux durs, lesquels sont évacués, ***et en ce que*** l'appareil (4) assurant des fonctions de cyclone-séparateur des matériaux durs et des poussières présente à sa base une colonne de distribution (5) susceptible de permettre l'évacuation par gravité des matériaux durs dans des containers (6), l'évacuation des déchets textiles traités se faisant par la sortie (7) en partie haute de l'appareil pour permettre les opérations suivantes de nappage des matières préparées par granulation pour définir des nappes en épaisseur et en densité, puis par une opération de traitement à sec ou humide des matériaux textiles traités, puis une opération de thermo-liage, et aussi une sortie (8) par le haut pour l'évacuation des poussières.

10. Installation permettant le traitement des déchets textiles en vue de l'obtention des matières textiles recyclées selon la revendication 8 et mettant en oeuvre le procédé selon les revendications 1 et 5, ***caractérisée* en ce que** la table densimétrique (9) inclut une table de vibrations inclinée (10) avec un mécanisme vibratoire associé, une entrée (11) des matières textiles traitées en amont par la machine de granulation (2), *et **en ce que*** ladite entrée (11) se situe en partie haute de la table densimétrique (9) pour distribuer les matières déchiquetées sur la table vibrante, et **en ce que** un dispositif (12) de distribution d'air est disposé à côté de la table densimétrique et envoyant l'air à l'intérieur de la table densimétrique de bas en haut, selon les flèches F1-F2-F3, selon les stades **d'évacuation, *et en ce que*** un moyen collecteur et élévateur (13) réceptionnant les matières fines lourdes (B) pour les évacuer, et **en ce que** l'entrée (11) permet l'alimentation de la table densimétrique (9) avec des matières légères, des matières lourdes, des matières fines lourdes et des matières ultra légères et des poussières, *et **en ce que*** par l'action et le fonctionnement de la table densimétrique, les matières lourdes (A) sont évacuées latéralement au niveau de la partie haute de la table vibratoire inclinée, ***et en ce que*** les matières fines lourdes (B) sont évacuées vers la partie basse de la table densimétrique en passant à travers une grille, et **en ce que** les matières légères (C) sont évacuées latéralement en sortie basse de la table vibratoire inclinée et qui correspondent aux produits **nettoyés, *et en ce que*** les matières ultra légères et poussières (D) sont évacuées par le haut de la table densimétrique.

11. Installation permettant le traitement des déchets textiles en vue de l'obtention des matières textiles recyclées selon la revendication 8 et mettant en oeuvre le procédé selon les revendications 1 et 5, ***caractérisée* en ce que** la table densimétrique (9) inclut une table de vibrations inclinée (10) avec un mécanisme vibratoire associé, une entrée (11) des matières textiles traitées en amont par la machine de granulation (2), ***et en ce que*** ladite entrée (11) se situe en partie haute de la table densimétrique (9) pour distribuer les matières déchiquetées sur la table vibrante, et **en ce que** un dispositif (12) de distribution d'air est disposé à côté de la table densimétrique et envoyant l'air à l'intérieur de la table densimétrique de bas en haut, selon les flèches F1-F2-F3, selon les stades d'évacuation, *et **en ce que*** un moyen collecteur et élévateur (13) réceptionnant les matières fines lourdes (B) pour les évacuer, et **en ce que** l'entrée (11) permet l'alimentation de la table densimétrique (9) avec des matières légères, des matières lourdes, des matières fines lourdes et des matières ultra légères et des poussières, *et **en ce que*** par l'action et le fonctionnement de la table densimétrique, les matières lourdes (A) sont évacuées latéralement au niveau de la partie haute de la table vibratoire inclinée, ***et en ce que*** les matières fines lourdes (B) sont évacuées vers la partie basse de la table densimétrique en passant à travers une grille, et **en ce que** les matières légères (C) et les matières ultra légères et poussières (D) sont évacuées par le haut de la table densimétrique.

12. Installation selon l'une quelconque des revendications 8 à 11, ***caractérisée* en ce que** la grille (14) intégrée dans la machine de granulation est agencée pour comporter des aspérités (14b) permettant un défibrage des matières, lesdites aspérités étant réalisées sous forme de stries, rainurages, ou pics.

13. Installation selon la revendication 12, ***caractérisée* en ce que** les stries ou aspérités formées sur la grille sont disposées d'une manière homogène ou discontinue en bandes, avec alternance de zones avec aspérités ou stries et de zones sans aspérités ou stries.
